# EUROPÄISCHE PATENTSCHRIFT

(11) **EP 3 669 638 B1**
(45) Veröffentlichungstag und Bekanntmachung des Hinweises auf die Patenterteilung: **19.10.2022**
(21) Anmeldenummer: 19218105.5
(22) Anmeldetag: 19.12.2019
(51) Int. Cl.: A01D 89/00

(54) **LANDWIRTSCHAFTLICHE ERNTEMASCHINE**
AGRICULTURAL HARVESTING MACHINE
ENGIN D'ABATTAGE-FAÇONNAGE AGRICOLE

(30) Priorität: 20.12.2018 DE 202018107313 U
(43) Veröffentlichungstag der Anmeldung: 24.06.2020
(73) Patentinhaber: PÖTTINGER Landtechnik GmbH, 4710 Grieskirchen (AT)
(72) Erfinder: Aumayr, Klaus, 4710 Grieskirchen (AT)
(74) Vertreter: Thoma, Michael

(56) Entgegenhaltungen:
- EP-A1- 1 932 419
- EP-A1- 3 135 099
- EP-B1- 2 941 946
- US-B2- 7 448 196

## Beschreibung

Die vorliegende Erfindung betrifft eine landwirtschaftliche Erntemaschine, insbesondere einen Ladewagen oder eine Ballenpresse, mit einem Aufnahmeförderer zum Aufnehmen von Erntegut vom Boden umfassend einen Stachelrotor, der umlaufend antreibbare Förderzinken aufweist, einem Anschlussförderer, an den der Aufnahmeförderer das vom Boden aufgenommene Erntegut übergibt, sowie einer zumindest teilweise über dem Stachelrotor angeordneten Förderhilfe zum Unterstützen der Erntegutübergabe von der Stachelwalze an den Anschlussförderer, wobei die genannte Förderhilfe mittels zumindest zwei voneinander beabstandeten Tragarmen beweglich aufgehängt ist, die jeweils schwenkbar um eine liegende Achse quer zur Fahrtrichtung an einen Maschinenrahmen angelenkt sind und zusätzlich zu Höhenbewegungen der Förderhilfe auch ein Verkippen der Förderhilfe um eine liegende, näherungsweise fahrtrichtungsparallele Achse zulassen.

Bei landwirtschaftlichen Erntemaschinen wie Ladewagen oder Ballenpressen, aber auch Mergern bzw. Bandschwadern ist es bekannt, geschnittenes Erntegut wie Heu und Gras mittels einer rotierenden Stachelwalze vom Boden aufzunehmen, die bisweilen auch als Pickup bezeichnet wird. Solche Stachelwalzen erstrecken sich regelmäßig liegend quer zur Fahrtrichtung und besitzen eine Vielzahl von Förderzinken, die entlang einer Umlaufbahn gesteuert oder ungesteuert angetrieben werden. Die genannten Umlaufbahnen der Förderzinken erstrecken sich dabei regelmäßig aufrecht etwa fahrtrichtungsparallel, wobei die Förderzinken bei ungesteuerter Ausbildung entlang einer Kreisbahn um eine fixe Drehachse rotieren können und bei gesteuerter Ausbildung zusätzlich zur Umlaufbewegung verkippen und/oder ein- und ausfahren können, wobei die genannte Umlaufbahn oft von der Kreisform abweichen und eine Steuerbewegung entlang der Umlaufbahn durch eine Kurvensteuerfläche beispielsweise in Form einer Führungskulisse oder durch Kurbelsteuerhebel erfolgen kann.

Um das von den Förderzinken aufgenommene Erntegut von den genannten Förderzinken wieder abstreifen zu können, sind zwischen den Förderzinken Abstreifer vorgesehen, die zumeist in Form von streifenförmigen Abstreiferblechen ausgebildet sind und zwischen sich spaltförmige Aussparungen begrenzen, in denen die Förderzinken angeordnet sind und mehr oder weniger weit über die Abstreiferbleche hinaus ausfahren bzw. sich dazwischen zurückziehen können. Die Umlaufbahnen der Förderzinken erstrecken sich koplanar zu den spaltförmigen Ausnehmungen, wobei in einem jeweiligen Spalt zwischen zwei benachbarten Abstreifern ein einzelner Förderzinken oder auch paarweise bzw. gruppenweise zusammengefasste Zinken laufen können.

Anstelle starrer, fester Abstreifer können zwischen den Zinken zumindest abschnittsweise auch umlaufende Förderbänder vorgesehen werden, vgl. DE 10 2017 001 012 A1. Die Abstreiferbleche können auch partiell im Abstreifbereich durch umlaufende Förderpaddel ersetzt werden, vgl. DE 20 2017 000 595 U1.

Um den Gutstrom im Bereich der Pickup zu verbessern und die Übergabe an den nachfolgenden Anschlussförderer zu vergleichmäßigen und sicherzustellen, ist es bekannt, zumindest teilweise oberhalb der Pickup eine Förderhilfe anzuordnen, sodass zwischen Pickup und Förderhilfe ein definierter Durchgangs- bzw. Förderkanal für das Erntegut gebildet wird. Eine solche Förderhilfe kann insbesondere ein Prallblech umfassen, das sich zumindest näherungsweise bogenförmig über die Umlaufbahn der Förderzinken der Pickup oder spitzwinklig hierzu geneigt erstreckt, um das Erntegut zu dem Anschlussförderer hinzuleiten. Alternativ oder zusätzlich zu einem solchen richtungsgebenden Prallblech kann die Förderhilfe auch eine drehbare Haspel oder eine Schwadrolle umfassen, vgl. beispielsweise EP 31 35 099 A1, wobei gerne eine Schwadwalze an der Einlaufkante des Prallblechs angebracht wird, um ein Hängenbleiben des Ernteguts an der Einlaufkante des Prallblechs zu verhindern.

Mittels einer solchen Förderhilfe über der Pickup wird insbesondere dem Problem vorgebeugt, dass bei höheren Steuergeschwindigkeiten des Stachelrotors der Pickup trockenes Erntegut wie beispielsweise getrocknetes Heu oder Stroh nicht der Umlaufbahn der Förderzinken der Pickup folgen, sondern von den Förderzinken nach oben abgeworfen werden, sodass das Erntegut nicht an den Anschlussförderer übergeben wird. Durch das wieder zurückfallende und dann wieder aufgenommene Erntegut kommt es zu einer ungleichmäßigen, pulsierenden Futteraufnahme, was zu Verstopfungen oder Überbelastungen im Bereich des Anschlussförderers führen kann.

Bei Ladewagen oder Ballenpressen kann der genannte Anschlussförderer insbesondere ein Förderrotor sein, dem ein Schneidwerk zugeordnet sein kann, um das Erntegut auf die gewünschte Länge zu zerschneiden. Bei ungleichmäßiger Beschickung kann es zu einer Beeinträchtigung des Schnittvorgangs bzw. einer Überbelastung des Schneidwerks und des Förderrotors kommen. Bei Mergern oder Bandschwadern kann der Anschlussförderer ein Querförderband sein, sodass es bei ungleichmäßiger Beschickung zu einem ungleichmäßigen Schwad kommt.

Ungleichmäßigkeiten kann es aber auch schon bei der Aufnahme des Ernteguts vom Boden geben, beispielsweise weil der Bewuchs nicht gleichmäßig war oder beim Zetten bzw. Schwaden kein gleichmäßig dicker Erntegutteppich erzeugt worden ist. Um die Wirkung der genannten Förderhilfe auch bei ungleichmäßigem, dicker oder dünner werdendem Aufnahmestrom sicherzustellen, wird die Förderhilfe üblicherweise höhenbeweglich aufgehängt, sodass sich die Höhe des Durchtrittsspalts zwischen Stachelwalze und Prallblech bzw. Schwadwalze an die Dicke des aufzunehmenden Erntegutstroms anpassen kann. Hierzu wird die Förderhilfe über der Pickup üblicherweise an schwenkbaren Tragarmen aufgehängt, die am Maschinenrahmen stromab der Pickup um eine liegende Schwenkachse quer zur Fahrtrichtung schwenkbar angelenkt sind, sodass die vorderen Enden der Tragarme mit den daran befestigten Prallblechen, Schwadrollen, Haspeln und dergleichen auf- und abwippen können.

Um den aufzunehmenden Erntegutteppich auch dann sicher führen bzw. mit der Pickup in Eingriff halten zu können, wenn der Erntegutteppich in seiner Dicke über die Breite der Pickup variiert, also beispielsweise am rechten Rand dicker ist als am linken Rand, ist es wünschenswert, wenn die Förderhilfe in Form des Prallblechs und/oder der Schwadrolle und/oder der genannten Haspel nicht nur auf- und abfahren kann, sondern um eine liegende, zumindest näherungsweise in Fahrtrichtung weisende Kippachse verkippen kann. Durch eine solche Verkippbarkeit der Förderhilfe wird der Durchtrittsspalt zwischen Förderhilfe und Pickup in seiner Dicke an solche über die Breite variierenden Erntegutteppiche angepasst.

Beispielweise schlägt die Schrift EP 29 41 946 B1 vor, die Tragarme mehrteilig auszubilden und mit einem scherenschlagartigen Klapp- und Schwenkmechanismus zu versehen, sodass die Schwenkarme zusätzlich zu den Höhenbewegungen des daran angelenkten Prallblechs auch noch Kippbewegungen des Prallblechs zulassen. Allerdings ist eine solche Ausbildung der Tragarme für die Förderhilfe sehr aufwendig und verschleißanfällig. Zudem benötigt der sich quer erstreckende Scherenschlagmechanismus relativ viel Platz, der gerade bei Ladewagen und Ballenpressen oberhalb der Pickup bzw. im Bereich des nachgeschalteten Förderrotors nicht vorhanden ist.

Der vorliegenden Erfindung liegt daher die Aufgabe zugrunde, eine verbesserte landwirtschaftliche Erntemaschine der eingangs genannten Art zu schaffen, die Nachteile des Standes der Technik vermeidet und letzteren in vorteilhafter Weise weiterbildet. Insbesondere soll eine einfache, verschleißresistente Aufhängung für die genannte Förderhilfe aus wenigen Bauteilen geschaffen werden, die dennoch zusätzlich zu den Höhenbewegungen auch noch Kippbewegungen der Förderhilfe zulässt.

Erfindungsgemäß wird die genannte Aufgabe durch eine landwirtschaftliche Erntemaschine gemäß Anspruch 1 gelöst. Bevorzugte Ausgestaltungen der Erfindung sind Gegenstand der abhängigen Ansprüche.

Es wird also eine spezielle, verblüffend einfache Gelenkigkeit der Tragarme vorgesehen, die die Förderhilfe oberhalb der Pickup stabil führt und dennoch zusätzlich zu Höhenbewegungen ein Verkippen zulässt. Erfindungsgemäß wird vorgeschlagen, dass zumindest einer der Tragarme in sich verdrehbar ausgebildet ist und ein Torsionsgelenk mit einer sich zumindest näherungsweise in Tragarm-Längsrichtung erstreckenden Torsionsachse zwischen zwei Tragarmteilen aufweist. Durch die tordierbare, in sich verdrehbare Ausbildung des Tragarms kann dessen vorderes Ende einfach und fest mit der Torsionshilfe verbunden werden, was es insbesondere erlaubt, ein richtungsgebendes Prallblech oder -tuch in der gewünschten Ausrichtung zu halten. Gleichwohl kann ein rechter Seitenabschnitt der Förderhilfe stärker oder schwächer aufwippen als ein linker Seitenabschnitt der Förderhilfe. Ein Verkippen der Förderhilfe kann der Tragarm durch das genannte Torsionsgelenk kompensieren bzw. zulassen. Ein vorderer, an der Förderhilfe angelenkter Armteil kann sich gegenüber einem hinteren Armteil um die Torsionsachse verdrehen, die sich zumindest näherungsweise in Längsrichtung des Tragarms und/oder näherungsweise fahrtrichtungsparallel, gegebenenfalls leicht schräg nach unten geneigt erstrecken kann. Die genannte Torsionsachse kann sich insbesondere etwa parallel zu einer Verbindungsgeraden erstrecken, die den Anlenkpunkt des Tragarms am Maschinenrahmen und den Anlenkpunkt des Tragarms an der Förderhilfe verbindet.

Gemäß einem weiteren vorteilhaften Aspekt zeichnet sich die landwirtschaftliche Erntemaschine dadurch aus, dass die Tragarme unterschiedlich voneinander ausgebildet sind und/oder an der Förderhilfe und/oder am Maschinenrahmen unterschiedlich angelenkt sind. Ein rechter Tragarm kann anders ausgebildet und/oder anders angelenkt sein als ein linker Tragarm, sodass die Tragarme unterschiedliche Funktionen erfüllen und sich ergänzen können.

Insbesondere kann einer der Tragarme starr und/oder nicht verkippbar mit der Förderhilfe verbunden sein, während ein anderer der Tragarme mit der Förderhilfe gelenkig bzw. verkippbar, insbesondere durch ein mehrachsiges Kippgelenk gelenkig mit der Förderhilfe verbunden sein kann. Der kippfest mit der Förderhilfe verbundene Tragarm kann die Förderhilfe in der gewünschten Ausrichtung halten, insbesondere ein richtungsgebendes Prallblech oder -tuch im Anstellwinkel führen. Gegenüber dem anderen Tragarm kann die Förderhilfe hingegen verkippen, insbesondere auch um eine liegende, näherungsweise fahrtrichtungsparallele Kippachse, sodass der andere Tragarm im Wesentlichen nur der Höhen- und/oder Querführung der Förderhilfe dient.

Insbesondere kann der in sich verdrehbare, tordierbare Tragarm mit der Förderhilfe starr und/oder kippfest verbunden sein, wobei insbesondere ein vorderer Endabschnitt des genannten Tragarms kippfest mit der Förderhilfe verbunden sein kann und der hintere Endabschnitt des Tragarms durch das genannte Torsionsgelenk gegenüber der Förderhilfe verdrehbar ist.

Der durch ein vorzugsweise mehrachsiges Kippgelenk mit der Förderhilfe verbundene andere Tragarm kann einstückig und/oder zumindest im Wesentlichen starr ausgebildet sein. Insbesondere kann der genannte Tragarm lediglich an seinen Endabschnitten gelenkig mit der Förderhilfe und dem Maschinenrahmen verbunden sein, im Übrigen aber keine weiteren Gelenke aufweisen.

Alternativ käme es in Betracht, auch den zweiten Tragarm mit einem Torsionsgelenk zu versehen, wobei der Tragarm in diesem Fall dann starr bzw. kippfest an der Förderhilfe angelenkt sein könnte. Im Sinne einer einfachen Ausbildung mit wenigen Gelenken kann es aber auch vorteilhaft sein, nur einen Tragarm mit einem Torsionsgelenk zu versehen und den anderen Tragarm starr auszubilden.

Alternativ oder zusätzlich können auch die Gelenke, über die die Tragarme am Maschinenrahmen angelenkt sind, voneinander unterschiedlich ausgebildet sein. Einer der Tragarme kann mit einem einachsigen Schwenkgelenk mit einer vorzugsweise festen Schwenkachse am Maschinenrahmen angelenkt sein, während ein anderer Tragarm über ein mehrachsig verkippbares Kippgelenk am Maschinenrahmen angelenkt sein kann. Insbesondere kann der Torsionsgelenk aufweisende Tragarm nur einachsig verschwenkbar am Maschinenrahmen gelagert sein, wobei das einachsige Schwenkgelenk eine liegende, quer zur Fahrtrichtung ausgerichtete Schwenkachse aufweisen kann. Dementsprechend ist der genannte Schwenkarm auf- und abwippbar.

Der andere Tragarm, der starr ausgebildet sein kann, kann mittels eines Kugelgelenks mehrachsig verschwenkbar am Maschinenrahmen angelenkt sein, wobei anstelle eines tatsächlich vollständig sphärisch ausgebildeten Gelenks auch ein einfaches, an sich einachsiges Zapfengelenk Verwendung finden kann, das ein ausreichendes Spiel aufweist, um ein Querverkippen der Schwenkachse und damit eine mehrachsige Gelenkigkeit zu ermöglichen. Auch ein Tonnengelenk, das nur ein begrenztes Verkippen zulässt, kann Verwendung finden.

Der genannte andere Tragarm, der starr ausgebildet sein kann, kann alternativ jedoch auch durch ein einachsiges Schwenkgelenk am Maschinenrahmen angelenkt sein, welches eine liegende, im Wesentlichen quer zur Fahrtrichtung ausgerichtete Schwenkachse aufweisen kann, um dem Tragarm ein Auf- und Niederwippen zu ermöglichen.

Um die Stabilität der Förderhilfe-Aufhängung in Querrichtung zu verbessern bzw. erhöhen, können die Tragarme Querführungsabschnitte aufweisen, über die sich die Tragarme an einem maschinenrahmenfesten Anschlagelement oder einer maschinenfesten Führungsbahn abstützen können, welche Führungsbahn sich bogenförmig um den Anlenkpunkt der Tragarme am Maschinenrahmen erstrecken kann. Insbesondere können die Tragarme jeweils an ihren gegenüberliegenden Innenseiten die genannten Seitenführungsabschnitte umfassen, die bei Querbewegungen der Förderhilfe an der maschinenfesten Führungsbahn anstehen bzw. anschlagen bzw. darauf abgleiten können. Vorteilhafterweise können die genannten Seitenführungsabschnitte der Tragarme jeweils in einem mittleren Abschnitt des jeweiligen Tragarms vorgesehen sein und/oder einerseits vom maschinenrahmenseitigen Anlenkpunkt und andererseits vom förderhilfeseitigen Anlenkpunkt des Tragarms beabstandet sein. Beispielsweise können die Seitenführungsabschnitte in einem Längenabschnitt von etwas 1/3 bis 2/3 von einer Tragarmendseite her betrachtet vorgesehen sein.

Die genannten Seitenführungsabschnitte können beispielsweise erhabene oder vorspringende Anschlagflächen sein, die im Wesentlichen vertikal ausgerichtet sein können und/oder in Richtung der Hubschwenkachse der Tragarme blicken können.

Vorteilhafterweise kommt die Aufhängung trotz der mehrachsigen Beweglichkeit der Förderhilfe mit nur wenigen Gelenkstellen, insbesondere mit nur vier Gelenkstellen an den Tragarmen aus. Während der eine Tragarm eine Gelenkstelle zur Verbindung am Maschinenrahmen und das genannte Torsionsgelenk aufweist, kann der andere, starr ausgebildete Tragarm lediglich an seinen Endabschnitten Gelenke zum Verbinden am Maschinenrahmen und an der Förderhilfe aufweisen. Trotz nur vier Gelenkstellen kann die Förderhilfe nicht nur auf- und abwippen, sondern zusätzlich zu den Höhenbewegungen auch noch um eine liegende, näherungsweise fahrtrichtungsparallele Kippachse verkippen, um sich an den Erntegutstrom anzupassen. Gleichzeitig wird die Förderhilfe stabil geführt, wobei ein richtungsgebendes Prallblech oder -tuch in seinem Anstellwinkel geführt werden kann und gleichzeitig eine Querführung gewährleistet ist, die übermäßige Bewegungen der Förderhilfe in einer Richtung parallel zur Umlaufachse der Pickup verhindert.

Die Erfindung wird nachfolgend anhand bevorzugter Ausführungsbeispiele und zugehöriger Zeichnungen näher erläutert. In den Zeichnungen zeigen:
- Fig. 1:: eine Seitenansicht der Pickup einer Erntemaschine und der dieser zugeordneten Förderhilfe mit einer Einlaufhaspel und einem Prallblech bzw. Prallstabgitter, die über zwei Tragarme höhenbeweglich und verkippbar aufgehängt sind,
- Fig. 2:: eine perspektivische Darstellung der Aufhängung der genannten Förderhilfe, die die beiden unterschiedlich ausgebildeten und angelenkten Tragarme der Aufhängung zeigt,
- Fig. 3:: eine Frontansicht der Aufhängung der Förderhilfe mit zwei ergänzenden Seitenansichten, die den Konturverlauf der Tragarme zeigen,
- Fig. 4:: eine Frontansicht der Aufhängung der Förderhilfe ähnlich Fig. 3, die die verschiedenen Gelenke der Tragarme zeigt, wobei der starre Tragarm an seinem maschinenrahmenseitigen Ende mit einem einachsigen Drehgelenk und an der Förderhilfe mit einem Kugelgelenk angelenkt ist,
- Fig. 5:: eine Frontansicht der Aufhängung der Förderhilfe ähnlich Fig. 4 nach einer anderen Ausführung der Erfindung, bei der der starre Tragarm an beiden Endabschnitten mit einem Kugelgelenk mehrachsig verkippbar angelenkt ist,
- Fig. 6:: eine unverkippte Neutralstellung der Pickup und der dieser zugeordneten Förderhilfe der Erntemaschine aus den vorhergehenden Figuren in einer Front- und Seitenansicht,
- Fig. 7:: die Pickup und die dieser zugeordnete Förderhilfe der Erntemaschine in einer Front- und Seitenansicht ähnlich Fig. 6, wobei die Stachelwalze der Pickup in einer unverkippten Neutralstellung verblieben ist und die zugeordnete Förderhilfe um eine liegende, in Fahrtrichtung weisende Achse gegenüber dem Stachelrotor verkippt ist,
- Fig. 8:: die Pickup und die zugeordnete Förderhilfe der Erntemaschine aus den vorhergehenden Figuren in einer Front- und Seitenansicht ähnlich den Figuren 6 und 7, wobei sowohl der Stachelrotor als auch die zugeordnete Förderhilfe um eine liegende, näherungsweise fahrtrichtungsparallele Kippachse verkippt sind, wobei Stachelrotor und Förderhilfe näherungsweise gleichstark verkippt sind,
- Fig. 9:: die Pickup und die zugeordnete Förderhilfe der Erntemaschine aus den vorhergehenden Figuren in einer Front- und Seitenansicht ähnlich den Figuren 6 bis 8, wobei der Stachelrotor und die Förderhilfe gleichsinnig gegenüber der Neutralstellung verkippt sind, jedoch die Förderhilfe stärker verkippt ist als der Stachelrotor, und
- Fig. 10:: die Pickup und die zugeordnete Förderhilfe der Erntemaschine aus den vorhergehenden Figuren in Front- und Seitenansicht ähnlich den Figuren 6 bis 9, wobei der Stachelrotor der Pickup und die Förderhilfe zueinander gegenläufig verkippt sind.

Die in den Figuren gezeigte Erntemaschine 1 kann zum Anbau an einen nicht dargestellten Schlepper ausgebildet sein und hierfür beispielsweise einen Anbaubock umfassen, der mittels einer Dreipunktaneckung am Schlepper befestigbar ist, oder eine Deichsel aufweisen, um die Erntemaschine als Aufsattelgerät ausbilden und an den Schlepper anhängen zu können. Insbesondere kann die genannte Erntemaschine 1 in Form eines Ladewagens oder einer Ballenpresse, gegebenenfalls aber auch als Bandschwader bzw. Merger ausgebildet sein.

Wie die Figuren zeigen, kann die Erntemaschine 1 einen Maschinenrahmen 3 umfassen, der über ein nicht näher gezeigtes Fahrwerk am Boden abgestützt sein kann, gegebenenfalls je nach Ausbildung aber auch über einen Anbaubock schwebend vom Schlepper gehalten sein kann.

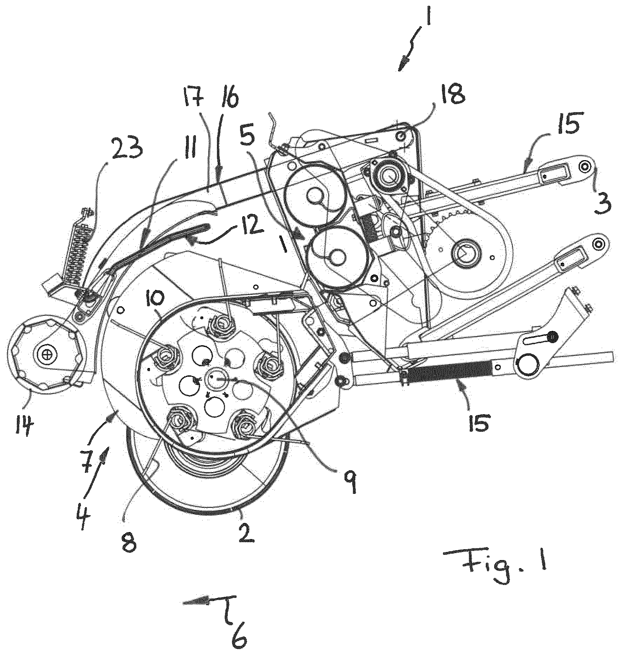

Der genannte Maschinenrahmen 3 trägt dabei einen Aufnahmeförderer 4, der Erntegut vom Boden aufsammelt und an einen Anschlussförderer 5 übergibt, der beispielsweise ein mit einem Schneidwerk versehener Förderrotor sein kann, um das aufgenommene Erntegut in eine Ballenformkammer oder den Speicherraum eines Ladewagens zu fördern. Der genannte Anschlussförderer 5 kann auch vorgeschaltete Querförderschnecken umfassen, wie sie in den Figuren 1 sowie 6 bis 10 zu sehen sind, um den Erntegutteppich, der vom Aufnahmeförderer 4 vom Boden aufgenommen wurde, zunächst zu verschmälern, bevor dieser dem Schneidwerk oder der Ballenformkammer bzw. dem Speicherraum zugeführt wird.

Der genannte Aufnahmeförderer 4 kann einen Stachelrotor 7 aufweisen, der liegend angeordnet ist und sich mit seiner Umlaufachse 9 querliegend zur Fahrtrichtung erstrecken kann. Die Förderzinken 8 des Stachelrotors 7 können dabei ungesteuert um die genannte Umlaufachse 9 auf einer Kreisbahn umlaufen oder auch gesteuert auf einer gegebenenfalls nicht kreisförmigen Umlaufbahn um die genannte Umlaufachse 9 herum umlaufen.

Zwischen den Förderzinken 8 kann der Stachelrotor 7 Abstreiferleisten 10 aufweisen, die sich bogenförmig um die Umlaufachse 9 herum erstrecken und zwischen denen die Förderzinken 8 heraus vorspringen.

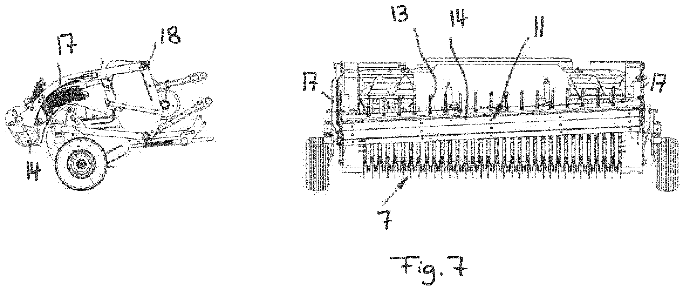

Der Stachelrotor 7 ist über eine Pickup-Aufhängung 15 am Maschinenrahmen 3 aufgehängt, sodass der Stachelrotor 7 Auf- und Abbewegungen ausführen kann und darüber hinaus auch um eine liegende, näherungsweise fahrtrichtungsparallele Achse verkippen kann, wie dies ein Vergleich der Figuren 7, 8 und 10 zeigt. Die Pickup-Aufhängung 15 kann hierfür mehrere Aufhängungslenker umfassen, vgl. Figur 1 und/oder auch eine kugelgelenksartige Abstützung der Pickup in einem Mittelabschnitt vorsehen, wie dies per se an sich bekannt ist.

Wie die Figuren 1 und beispielsweise 7 zeigen, kann der Stachelrotor 7 dabei durch ein Tastfahrwerk 2 am Boden abgestützt sein, um der Bodenkontur möglichst präzise folgen zu können. Ein solches Tastfahrwerk 2 kann beispielsweise 2 Tasträder umfassen, die rechts und links seitlich neben der Stachelwalze 7 am Boden laufen und den Stachelrotor über den Boden führen. Gegebenenfalls kann aber auch eine schwebende, beispielsweise sensorgesteuerte Aufhängung vorgesehen sein.

Wie die Figuren verdeutlichen, ist oberhalb des Stachelrotors 7 eine Förderhilfe 11 vorgesehen, die eine sich um den Umfang des Stachelrotors 7 schmiegende bzw. spitzwinklig zur Radialrichtung vom Stachelrotor 7 angeordnete Prallfläche 12 aufweist, um vom Stachelrotor 7 nach oben geworfenes Erntegut nach hinten zum Anschlussförderer 5 hin zu leiten. Die genannte Prallfläche 12 kann in verschiedener Weise ausgebildet sein, beispielsweise in Form eines Prallblechs oder eines von einem Aufspanngerüst aufgespannten Pralltuch. Alternativ oder zusätzlich kann die Prallfläche 12 zumindest abschnittsweise auch von einem Stabgitter 13 gebildet sein, wie dies die Figuren zeigen.

Betrachtet man entsprechend Figur 1 die genannte Prallfläche 12 in Richtung der Umlaufachse 9 des Stachelrotors 7, erstreckt sich die genannte Prallfläche 12 in einem Segment von etwa 9 Uhr bis 12 Uhr bzw. 10 Uhr bis 1 Uhr oder 10 Uhr bis 12 Uhr bzw. in einem Quadranten, der in Fahrtrichtung vorne und oberhalb des Stachelrotors 7 liegt.

Vorteilhafterweise kann die genannte Prallfläche 12 auf ihrer im Stachelrotor 7 zugewandten Seite konkav, näherungsweise leicht rinnenförmig gewölbt sein, wobei grundsätzlich aber auch eine ebene Ausbildung in Betracht kommt.

Vorteilhafterweise erstreckt sich die genannte Prallfläche 12 zur Vertikalen spitzwinklig geneigt, beispielsweise unter einem Winkel von etwa 30° bis 60° geneigt.

An ihren vorderen bzw. unteren Randabschnitt kann an die Prallfläche 12 eine Einlaufwalze 14 anschließen, die einen Teil der Förderhilfe 11 bildet und ein sanftes Einlaufen des Ernteguts unter die Prallfläche 12 ermöglicht. Die genannte Einlaufwalze 14 kann sich liegend quer zur Fahrtrichtung erstrecken und um eine Drehachse drehbar sein, wobei die genannte Einlaufwalze 14 ohne Antrieb frei drehbar sein kann, gegebenenfalls aber auch aktiv angetrieben werden kann. Die genannte Einlaufwalze 14 ist zusammen mit der Prallfläche 12 beweglich aufgehängt, wie dies im Folgenden erläutert wird.

Die Förderhilfe-Aufhängung 16 umfasst mehrere Tragarme 17, die stromab des Aufnahmeförderers 4, beispielsweise im Bereich des Anschlussförderers 5 am Maschinenrahmen 3 angelenkt sind und von dort nach vorne über den Aufnahmeförderer 4 vorspringen bzw. sich seitlich hiervon erstrecken. Insbesondere können die Tragarme 17 seitlich rechts und links von der Förderhilfe 11 bzw. auch seitlich des Stachelrotors 7 angeordnet sein, sodass die Förderhilfe 11 zusammen mit den Tragarmen 17 eine näherungsweise U-förmige Struktur bilden, die sich über dem Stachelrotor 7 erstreckt und durch die Tragarme 17 stromab am Maschinenrahmen 3 angelenkt ist.

Am Maschinenrahmen 3 sind die beiden Tragarme 17 jeweils um eine liegende, sich quer zur Fahrtrichtung 6 erstreckende Schwenkachse 18 schwenkbar gelagert, sodass die Tragarme 17 auf- und niederwippen können. Die maschinenrahmenseitigen Lager der Tragarme 17 können dabei in Form einachsiger Schwenkgelenke ausgebildet sein, gegebenenfalls aber auch in Form von Kugelgelenken und/oder vereinfachten, mehrachsig verkippbaren Gelenken, die zusätzlich zu der Verschwenkung um die Achse 18 auch noch ein Verkippen um in einer Richtung quer hierzu zulassen.

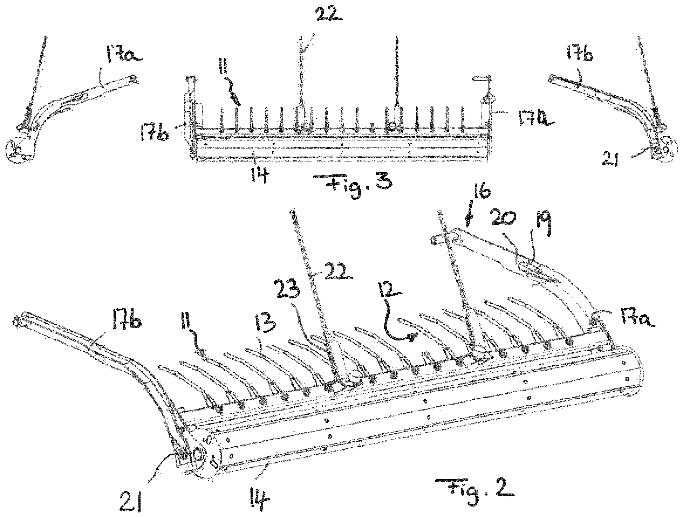

Wie Figur 2 bis Figur 5 zeigen, kann einer der Tragarme 17a in einem Mittelabschnitt, beispielsweise im Bereich von 30% bis 70% seiner Längserstreckung, ein Torsionsgelenk 19 aufweisen, dessen Torsionsachse 20 sich zumindest näherungsweise parallel zur Längserstreckung des Tragarms 17a erstreckt. Insbesondere kann sich die genannte Drehachse 20 in einer zumindest näherungsweise fahrtrichtungsparallelen, aufrechten Ebene erstrecken und leicht spitzwinklig zur Horizontalen nach vorne unten verkippt sein, vgl. Figur 2. Beispielsweise kann sich die Drehachse 20 unter einem Winkel von 10° bis 25° zur Horizontalen geneigt nach vorne unten erstrecken, insbesondere in einer aufrechten, fahrtrichtungsparallelen Ebene.

Das Torsionsgelenk 19 kann ein einachsiges Drehgelenk sein, beispielsweise in Form eines Scharniergelenks oder Bolzengelenks. Gegebenenfalls kann das Torsionsgelenk 19 aber auch durch einen entsprechend elastisch ausgebildeten, vorzugsweise im Querschnitt verjüngten Tragarmabschnitt gebildet sein, beispielsweise durch eine starke Profilverjüngung des Tragarms.

Durch das genannte Torsionsgelenk 19 kann sich der Tragarm 17a in sich verdrehen bzw. tordieren. Ein vorderes Tragarmteil, das an der Förderhilfe 11 angelenkt ist, kann sich gegenüber dem hinteren Tragarmteil, das am Maschinenrahmen 3 angelenkt ist, verdrehen.

Der vordere Tragarmteil des Tragarms 17a kann starr bzw. kippfest mit der Förderhilfe 11 verbunden sein, insbesondere einem Trägerteil, an den das Stabgitter 13 und die Einlaufwalze 17 angebracht sind, sodass die Ausrichtung des Tragarms 17a den Anstellwinkel des Stabgitters 13 festlegt.

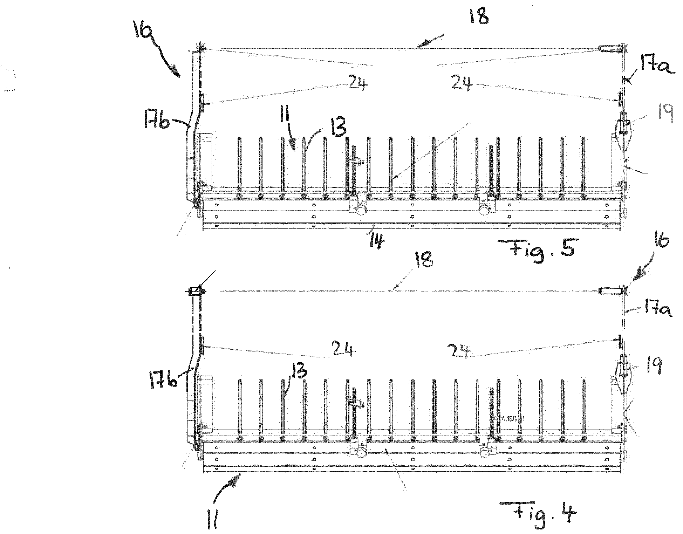

Wie die Figuren 4 und 5 zeigen, kann der hintere Tragarmteil des Tragarms 17a durch ein Kugelgelenk oder auch durch ein festes, einachsiges Bolzengelenk am Maschinenrahmen 3 schwenkbar angelenkt sein.

Der andere Tragarm 17b kann einteilig und im Wesentlichen starr ausgebildet sein, wobei der Tragarm 17b durch ein mehrachsig verkippbares Kippgelenk 21 verkippbar an der Förderhilfe 11 angelenkt ist, insbesondere einem Trägerteil, das mit dem Stabgitter 13 und der Einlaufwalze 14 verbunden ist. Hierdurch kann die Förderhilfe 11 gegenüber dem Tragarm 17 mehrachsig verkippen. Das genannte Kippgelenk 21 kann ein Kugelgelenk sein, gegebenenfalls aber auch ein nur begrenzt verkippbares Tonnengelenk, oder auch nur ein einachsiges Bolzengelenk mit entsprechendem Spiel, um Kippbewegungen zuzulassen.

Mit seinem hinteren Ende ist der Tragarm 17b am Maschinenrahmen 3 schwenkbar angelenkt, um zumindest um die Schwenkachse 18 auf- und niederwippen zu können. Das maschinenrahmenseitige Gelenk des Tragarms 17b kann dabei ein Kugelgelenk sein, vgl. Figur 5, gegebenenfalls auch in vereinfachter Form, oder es kann auch ein einachsiges Bolzengelenk Verwendung finden, vgl. Figur 4.

Die Förderhilfen-Aufhängung 16 kann ferner Höhenführungsmittel 22 umfassen, die die Förderhilfe 11 in einer gewünschten Höhenstellung und damit gewünschten Beabstandung vom Stachelrotor 7 halten, wobei die Höhenführungsmittel 22 beispielsweise eine oder mehrere biegeschlaffe Zugmittel beispielsweise in Form einer Kette umfassen können, die gegebenenfalls über eine Federeinrichtung 23 die Förderhilfe 11 halten, vgl. Figuren 2 und 3. Die genannten Höhenführungsmittel 22 können vorteilhafterweise in einem Mittelabschnitt, beispielsweise im Bereich von 30% bis 70% der Längserstreckung der Förderhilfe 11 angreifen, vgl. Figur 2.

Die Höhenführungsmittel 22 können vorteilhafterweise einstellbar ausgebildet sein, um verschiedene Höheneinstellungen zu ermöglichen. Beispielsweise können die in den Figuren gezeigten Ketten in verschiedenen Stellungen eingehängt werden.

Wie die Figuren 7 bis 10 verdeutlichen, ermöglicht die Förderhilfen-Aufhängung 16 nicht nur Höhenbewegungen der Förderhilfe 11 durch Auf- und Niederwippen der Tragarme 17, sondern auch ein Verkippen der Förderhilfe 11 einschließlich des Stabgitters 13 und der Einlaufwalze 14 um eine liegende, näherungsweise fahrtrichtungsparallele Kippachse, wobei ein solches Verkippen der Förderhilfe 11 vorteilhafterweise unabhängig von und relativ zu dem Stachelrotor 7 erfolgen kann. Hierdurch kann eine hervorragende Anpassung der Lage und Ausrichtung der Förderhilfe 11 an den jeweils aufgenommenen Erntegutteppich erfolgen. Insbesondere ist es hierdurch möglich, dass die Förderhilfe 11 gelichsinnig, aber auch gegenläufig zu dem Stachelrotor 7 verkippt, wie dies die Figuren 7 bis 10 zeigen.

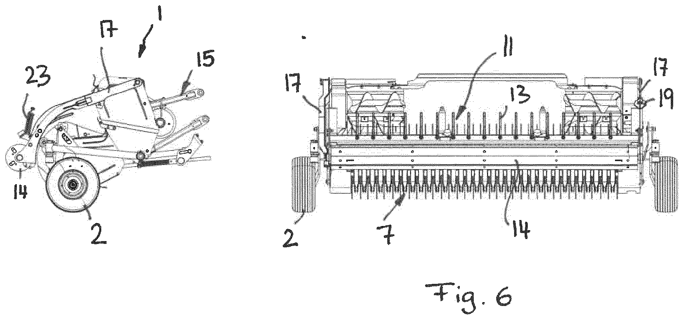

Hierdurch lassen sich folgende Förderszenarien bewerkstelligen:
Wie Figur 6 zeigt, können der Stachelrotor 7 und die Förderhilfe 11 in einer unverkippten Neutralstellung arbeiten, in denen der Stachelrotor 7 und die Förderhilfe 11 näherungsweise horizontal bzw. bodenparallel ausgerichtet sind, wobei je nach der Dicke des Erntegutteppichs die Förderhilfe 11 auf- und niederwippen kann und/oder bei Querbodenwellen der Stachelrotor 7 auf- und niederwippen kann.

Wie Figur 7 zeigt, kann der Stachelrotor 7 seine "normal" Arbeitsposition behalten und bodenparallel bzw. horizontal ausgerichtet bleiben, während die Förderhilfe 11 einseitig angehoben und dadurch verkippt werden kann, beispielsweise weil der einlaufende und von der Pickup aufgenommene Erntegutteppich an einem Randbereich deutlich dicker ist als am gegenüberliegenden Randbereich.

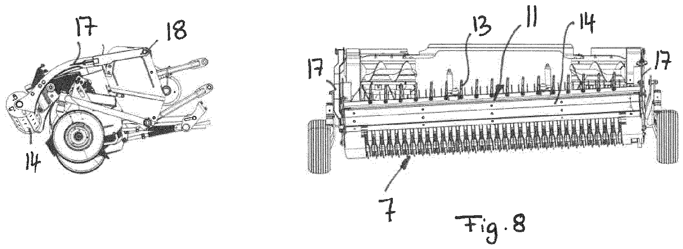

Neigt sich der Boden abschüssig zu einer Seite, bleibt jedoch der Erntegutteppich über seine Breite einigermaßen gleichmäßig dick, können sich sowohl der Stachelrotor 7 als auch die Förderhilfe 11 entsprechend der Bodenneigung verkippen bzw. neigen, wobei der Stachelrotor 7 und die Förderhilfe 11 näherungsweise parallel zueinander ausgerichtet bleiben können, vgl. Figur 8. Die Förderhilfe 11 macht sozusagen die durch die Bodenneigung bedingte Verkippung des Stachelrotors 7 mit und passt sich daran an.

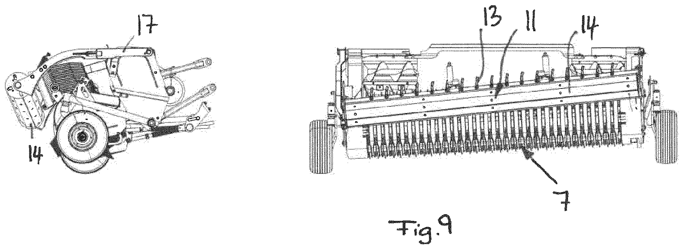

Kommt zu einer solchen Bodenneigung, die den Stachelrotor 7 verkippen lässt, auch noch ein ungleichmäßig geformter Erntegutteppich hinzu, der beispielsweise an einem Randbereich deutlich dicker ist als am gegenüberliegenden Randbereich, kann die Förderhilfe 11 zusätzlich auch noch gegenüber dem Stachelrotor 7 verkippen, wie dies Figur 9 zeigt.

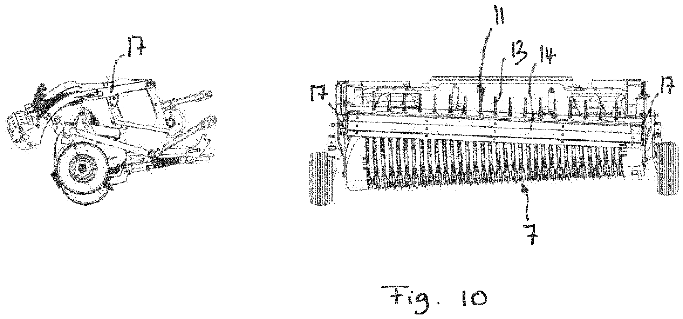

Ist der Erntegutteppich andererseits auf der Seite, zu der der Boden hin abschüssig abfällt, dicker als am bergaufseitigen Randbereich, kann die Förderhilfe 11 auch gegenläufig zum Stachelrotor 7 verkippen, vgl. Figur 10.

Neben der besseren situationsabhängigen Anpassung der Lage und Ausrichtung der Förderhilfe 11 ergibt sich auch noch der ergonomische Vorteil, dass bei einem einseitigen Anheben der Förderhilfe 11 zunächst weniger Gewicht bewegt werden muss, wodurch sich die Förderhilfe 11 leichtfüßiger an ungleichförmige Erntegutteppiche bzw. asymmetrische Schwadquerschnitte anpassen kann.

Die ungleiche Ausbildung der beiden Tragarme 17 und deren Lager bzw. Gelenke kann selbstverständlich auch in spiegelbildlicherweise zu der in den Figuren gezeigten Ausführung vorgenommen werden.

Wie die Figuren 4 und 5 zeigen, können die Tragarme 17 insbesondere an ihren Inneseiten Seitenführungsabschnitte 24 umfassen, beispielsweise in Form von nach innen vorspringenden Kunststoff-Gleitflächen. Die genannten Seitenführungsabschnitte 24 können an maschinenrahmenfesten Gegenflächen, die sich bogenförmig um die Schwenkachse 18 herum erstrecken können, abgleiten bzw. daran anschlagen, um die Tragarme 17 gegen Querbewegungen zu sichern bzw. zu führen.

## Patentansprüche

1. Landwirtschaftliche Erntemaschine, insbesondere in Form eines Ladewagens oder einer Ballenpresse, mit einem Aufnahmeförderer (4) zum Aufnehmen von Erntegut vom Boden umfassend einen Stachelrotor (7), der umlaufend antreibbare Förderzinken (8) aufweist, einem Anschlussförderer (5), an den der Aufnahmeförderer (4) das vom Boden aufgenommene Erntegut übergibt, sowie einer über dem Stachelrotor (7) angeordneten Förderhilfe (11) zum Unterstützen der Erntegutübergabe von dem Stachelrotor (7) an den Anschlussförderer (4), wobei die genannte Förderhilfe (11) mittels zumindest zwei voneinander beabstandeten Tragarmen (17) beweglich aufgehängt ist, die jeweils schwenkbar um eine liegende Achse (18) quer zur Fahrtrichtung (6) an einem Maschinenrahmen (3) angelenkt sind und zusätzlich zu Höhenbewegungen der Förderhilfe (11) auch ein Verkippen der Förderhilfe (11) um eine liegende, näherungsweise fahrtrichtungsparallele Achse zulassen, **dadurch gekennzeichnet, dass** zumindest einer der Tragarme (17a) in sich verdrehbar ausgebildet ist und ein Torsionsgelenk (19) mit einer sich zumindest näherungsweise in Tragarmlängsrichtung erstreckenden Torsionsachse (20) zwischen zwei Tragarmteilen aufweist.

2. Landwirtschaftliche Erntemaschine nach dem vorhergehenden Anspruch, wobei die Torsionsachse (20) in einer zumindest näherungsweise fahrtrichtungsparallelen, aufrechten Ebene angeordnet und gegenüber der Horizontalen spitzwinklig unter einem Winkel von weniger als 40° oder weniger als 30° geneigt ist.

3. Landwirtschaftliche Erntemaschine nach einem der vorhergehenden Ansprüche, wobei die Tragarme (17) unterschiedlich voneinander ausgebildet sind und/oder an der Förderhilfe (11) unterschiedlich angelenkt sind.

4. Landwirtschaftliche Erntemaschine nach dem vorhergehenden Anspruch, wobei zusätzlich zu dem in sich verdrehbar ausgebildeten Tragarm (17a) ein starrer Tragarm (17b) vorgesehen ist.

5. Landwirtschaftliche Erntemaschine nach einem der vorhergehenden Ansprüche, wobei einer der Tragarme (17a) an der Förderhilfe (11) starr oder kippfest befestigt ist und ein anderer Tragarm (17b) an der Förderhilfe einachsig oder mehrachsig verkippbar angelenkt ist.

6. Landwirtschaftliche Erntemaschine nach dem vorhergehenden Anspruch, wobei der mit dem Torsionsgelenk (19) versehene Tragarm (17a) an der Förderhilfe (11) starr oder kippfest befestigt ist und der mit der Förderhilfe (11) gelenkig verbundene Tragarm (17b) starr ausgebildet ist.

7. Landwirtschaftliche Erntemaschine nach einem der vorhergehenden Ansprüche, wobei einer der Tragarme (17) am Maschinenrahmen (3) mehrachsig verkippbar angelenkt ist und ein anderer Tragarm an dem Maschinenrahmen (3) einachsig verschwenkbar angelenkt ist.

8. Landwirtschaftliche Erntemaschine nach einem der vorhergehenden Ansprüche, wobei die beiden Tragarme (17) jeweils mehrachsig verkippbar, insbesondere durch ein Kugelgelenk, an dem Maschinenrahmen (3) angelenkt sind.

9. Landwirtschaftliche Erntemaschine nach einem der vorhergehenden Ansprüche, wobei zumindest einer der Tragarme (17) einen Seitenführungsabschnitt (24) zum Begrenzen von Querbewegungen des Tragarms aufweist und mit einem maschinenrahmenfesten Gegenführungsstück in Eingriff bringbar ist, wobei das maschinenrahmenfeste Gegenstück eine Anschlagfläche umfasst, die sich bogenförmig um den maschinenrahmenseitigen Anlenkpunkt des Tragarms in einer aufrechten Ebene erstreckt.

10. Landwirtschaftliche Erntemaschine nach dem vorhergehenden Anspruch, wobei beide Tragarme (17) jeweils in einem Mittelabschnitt an ihren einander zugewandten Innenseiten einen vorzugsweise vorspringenden Seitenführungsabschnitt (24) aufweisen, wobei die Seitenführungsabschnitte (24) als Gleitführungselemente insbesondere aus Kunststoff ausgeführt sind.

11. Landwirtschaftliche Erntemaschine nach einem der vorhergehenden Ansprüche, wobei die Förderhilfe (11) eine Prallfläche (12) umfasst, die sich, bei Betrachtung in Richtung der Umlaufachse (9) des Stachelrotors (7), in einem Sektor von 9 Uhr bis 12 Uhr erstreckt, wenn 9 Uhr die Fahrtrichtung (6) weist.

12. Landwirtschaftliche Erntemaschine nach dem vorhergehenden Anspruch, wobei die Prallfläche (12) zum Stachelrotor (7) hin konkav, insbesondere rinnenförmig, gewölbt ist und sich zur Vertikalen unter einem Winkel von etwa 10° bis 80° oder 25° bis 65° oder 40° bis 50° geneigt erstreckt.

13. Landwirtschaftliche Erntemaschine nach einem der vorhergehenden Ansprüche, wobei die Förderhilfe (11) in einem Einlaufbereich eine drehbare Einlaufwalze (14) umfasst.

14. Landwirtschaftliche Erntemaschine nach einem der vorhergehenden Ansprüche, wobei der Stachelrotor (7) durch eine Pickup-Aufhängung (15) höhenbeweglich und zusätzlich zu den Höhenbewegungen verkippbar um eine liegende, näherungsweise fahrtrichtungsparallele Kippachse aufgehängt ist.

15. Landwirtschaftliche Erntemaschine nach dem vorhergehenden Anspruch, wobei die Förderhilfe (11) und der Stachelrotor (7) unabhängig voneinander jeweils um eine liegende, näherungsweise fahrtrichtungsparallele Kippachse verkippbar sind, sodass der Stachelrotor (7) und die Förderhilfe (11) einerseits gleichsinnig zueinander und andererseits gegenläufig zueinander verkippbar sind.

## Claims

1. Agricultural harvesting machine, in particular in the form of a loader wagon or a baler, having a pick-up conveyor (4) for picking up harvested material from the ground, comprising a spiked rotor (7) that has conveyor tines (8) that can be driven continuously, a connecting conveyor (5) to which the pick-up conveyor (4) transfers the harvested material picked up from the ground, as well as a conveying aid (11) arranged above the spiked rotor (7) for supporting the crop transfer from the spiked rotor (7) to the connecting conveyor (4), wherein said conveying aid (11) is movably suspended by means of at least two supporting arms (17) spaced apart from one another, which are each articulated to a machine frame (3) so as to be pivotable about a horizontal axis (18) transverse to the direction of travel (6) and, in addition to vertical movements of the conveying aid (11), also permit tilting of the conveying aid (11) about a horizontal axis approximately parallel to the direction of travel, **characterised in that** at least one of the supporting arms (17a) is designed to be rotatable in itself and has a torsion joint (19) with a torsion axis (20) extending at least approximately in the longitudinal direction of the supporting arm between two supporting arm parts.

2. Agricultural harvesting machine according to the preceding claim, wherein the torsion axis (20) is arranged in an upright plane at least approximately parallel to the direction of travel and is inclined at an acute angle to the horizontal at an angle of less than 40° or less than 30°.

3. Agricultural harvesting machine according to any one of the preceding claims, wherein the supporting arms (17) are formed differently from one another and/or are articulated differently on the conveying aid (11).

4. Agricultural harvesting machine according to the preceding claim, wherein a rigid supporting arm (17b) is provided in addition to the supporting arm (17a) designed to be rotatable in itself.

5. Agricultural harvesting machine according to any one of the preceding claims, wherein one of the supporting arms (17a) attached to the conveying aid (11) in a rigid or tilt-proof manner and another supporting arm (17b) is hinged to the conveying aid in a uniaxial or multi-axial tiltable manner.

6. Agricultural harvesting machine according to the preceding claim, wherein the supporting arm (17a) provided with the torsion joint (19) is fastened to the conveying aid (11) in a rigid or tilt-proof manner and the supporting arm (17b) connected to the conveying aid (11) in an articulated manner is formed to be rigid.

7. Agricultural harvesting machine according to any one of the preceding claims, wherein one of the supporting arms (17) is hinged to the machine frame (3) in a multi-axial tiltable manner and another supporting arm is hinged to the machine frame (3) in a uniaxial pivotable manner.

8. Agricultural harvesting machine according to any one of the preceding claims, wherein both supporting arms (17) are each hinged to the machine frame (3) in a multi-axial tiltable manner, in particular by a ball joint.

9. Agricultural harvesting machine according to any one of the preceding claims, wherein at least one of the supporting arms (17) has a lateral guide portion (24) for limiting transverse movements of the supporting arm and can be engaged with a counter-guide piece fixed to the machine frame, wherein the counter-guide piece fixed to the machine frame comprises a stop surface that extends arcuately around the machine frame-side articulation point of the supporting arm in an upright plane.

10. Agricultural harvesting machine according to the preceding claim, wherein both supporting arms (17) each have a preferably projecting lateral guide portion (24) in a central portion on their inner sides facing one another, wherein the lateral guide portions (24) are designed as sliding guide elements, in particular made of plastic.

11. Agricultural harvesting machine according to any one of the preceding claims, wherein the conveying aid (11) comprises a baffle surface (12) that, when viewed in the direction of the axis of rotation (9) of the spiked rotor (7), extends in a segment from 9 o'clock to 12 o'clock if 9 o'clock points in the direction of travel (6).

12. Agricultural harvesting machine according to the preceding claim, wherein the baffle surface (12) is curved concavely, in particular groove-like, towards the spiked rotor (7), and extends inclined to the vertical at an angle of approximately 10° to 80° or 25° to 65° or 40° to 50°.

13. Agricultural harvesting machine according to any one of the preceding claims, wherein the conveying aid (11) comprises a rotatable infeed roller (14) in an infeed region.

14. Agricultural harvesting machine according to any one of the preceding claims, wherein the spiked rotor (7) is suspended by a pick-up suspension (15) so as to be vertically movable and, in addition to the vertical movements, tiltable about a horizontal tilt axis approximately parallel to the direction of travel.

15. Agricultural harvesting machine according to the preceding claim, wherein the conveying aid (11) and the spiked rotor (7) can each be tilted independently of one another about a horizontal tilting axis approximately parallel to the direction of travel, so that the spiked rotor (7) and the conveying aid (11) can be tilted both concordantly to one another as well as reversely to one another.

## Revendications

1. Machine de récolte agricole, notamment sous la forme d'une remorque autochargeuse ou d'une presse à balles, avec un transporteur de ramassage (4) pour ramasser le produit récolté à partir du sol, comprenant un rotor à pointes (7) qui présente des dents de transport (8) pouvant être entraînées en rotation, un transporteur de raccordement (5) auquel le transporteur de ramassage (4) transfère le produit récolté ramassé à partir du sol, ainsi qu'un auxiliaire de transport (11) agencé au-dessus du rotor à pointes (7) pour assister le transfert du produit récolté du rotor à pointes (7) au transporteur de raccordement (4), ledit auxiliaire de transport (11) étant suspendu de manière mobile au moyen d'au moins deux bras porteurs (17) espacés l'un de l'autre, qui sont chacun articulés sur un châssis de machine (3) de manière à pouvoir pivoter autour d'un axe horizontal (18) transversalement à la direction de marche (6) et qui, en plus de mouvements en hauteur de l'auxiliaire de transport (11), permettent également un basculement de l'auxiliaire de transport (11) autour d'un axe horizontal approximativement parallèle à la direction de marche, **caractérisée en ce qu'**au moins l'un des bras porteurs (17a) est configuré de manière à pouvoir tourner sur lui-même et présente une articulation de torsion (19) avec un axe de torsion (20) s'étendant au moins approximativement dans la direction longitudinale du bras porteur entre deux parties du bras porteur.

2. Machine de récolte agricole selon la revendication précédente, dans laquelle l'axe de torsion (20) est agencé dans un plan vertical au moins approximativement parallèle à la direction de marche et est incliné à angle aigu par rapport à l'horizontale selon un angle de moins de 40° ou de moins de 30°.

3. Machine de récolte agricole selon l'une quelconque des revendications précédentes, dans laquelle les bras porteurs (17) sont configurés différemment les uns des autres et/ou sont articulés différemment sur l'auxiliaire de transport (11).

4. Machine de récolte agricole selon la revendication précédente, dans laquelle un bras porteur rigide (17b) est prévu en plus du bras porteur (17a) configuré de manière à pouvoir tourner sur lui-même.

5. Machine de récolte agricole selon l'une quelconque des revendications précédentes, dans laquelle l'un des bras porteurs (17a) est fixé de manière rigide ou résistante au basculement à l'auxiliaire de transport (11) et un autre bras porteur (17b) est articulé sur l'auxiliaire de transport de manière à pouvoir basculer autour d'un axe ou de plusieurs axes.

6. Machine de récolte agricole selon la revendication précédente, dans laquelle le bras porteur (17a) pourvu de l'articulation de torsion (19) est fixé à l'auxiliaire de transport (11) de manière rigide ou résistante au basculement et le bras porteur (17b) relié de manière articulée à l'auxiliaire de transport (11) est configuré de manière rigide.

7. Machine de récolte agricole selon l'une quelconque des revendications précédentes, dans laquelle l'un des bras porteurs (17) est articulé sur le châssis de machine (3) de manière à pouvoir basculer autour de plusieurs axes et un autre bras porteur est articulé sur le châssis de machine (3) de manière à pouvoir pivoter autour d'un axe.

8. Machine de récolte agricole selon l'une quelconque des revendications précédentes, dans laquelle les deux bras porteurs (17) sont chacun articulés sur le châssis de machine (3) de manière à pouvoir basculer autour de plusieurs axes, notamment par une articulation à rotule.

9. Machine de récolte agricole selon l'une quelconque des revendications précédentes, dans laquelle au moins l'un des bras porteurs (17) présente une section de guidage latéral (24) pour limiter des mouvements transversaux du bras porteur et peut être mis en prise avec une contre-pièce de guidage solidaire du châssis de machine, la contre-pièce solidaire du châssis de machine comprenant une surface de butée qui s'étend en forme d'arc autour du point d'articulation du bras porteur côté châssis de machine dans un plan vertical.

10. Machine de récolte agricole selon la revendication précédente, dans laquelle les deux bras porteur (17) présentent chacun, dans une section centrale, sur leurs côtés intérieurs tournés l'un vers l'autre, une section de guidage latéral (24) de préférence en saillie, les sections de guidage latéral (24) étant réalisées sous forme d'éléments de guidage coulissant, notamment en matière plastique.

11. Machine de récolte agricole selon l'une quelconque des revendications précédentes, dans laquelle l'auxiliaire de transport (11) comprend une surface d'impact (12) qui, lorsqu'on la regarde dans la direction de l'axe de rotation (9) du rotor à pointes (7), s'étend dans un secteur de 9 heures à 12 heures, lorsque 9 heures indique la direction de marche (6).

12. Machine de récolte agricole selon la revendication précédente, dans laquelle la surface d'impact (12) est bombée de manière concave, notamment en forme de rigole, vers le rotor à pointes (7) et s'étend inclinée par rapport à la verticale selon un angle d'environ 10° à 80° ou 25° à 65° ou 40° à 50°.

13. Machine de récolte agricole selon l'une quelconque des revendications précédentes, dans laquelle l'auxiliaire de transport (11) comprend un rouleau d'entrée rotatif (14) dans une zone d'entrée.

14. Machine de récolte agricole selon l'une quelconque des revendications précédentes, dans laquelle le rotor à pointes (7) est suspendu par une suspension de ramasseur (15) de manière à pouvoir se déplacer en hauteur et, en plus des mouvements en hauteur, à pouvoir basculer autour d'un axe de basculement horizontal, approximativement parallèle à la direction de marche.

15. Machine de récolte agricole selon la revendication précédente, dans laquelle l'auxiliaire de transport (11) et le rotor à pointes (7) peuvent chacun être basculés indépendamment l'un de l'autre autour d'un axe de basculement horizontal, approximativement parallèle à la direction de marche, de telle sorte que le rotor à pointes (7) et l'auxiliaire de transport (11) peuvent être basculés d'une part dans le même sens l'un par rapport à l'autre et d'autre part dans le sens inverse l'un par rapport à l'autre.
